# EUROPEAN PATENT SPECIFICATION

(11) **EP 2 363 580 B1**
(45) Date of publication and mention of the grant of the patent: **05.06.2013**
(21) Application number: 11001487.5
(22) Date of filing: 23.02.2011
(51) Int. Cl.: F01L 3/08

(54) **Valve stem seal**
Ventilschaftdichtung
Joint de tige de vanne

(30) Priority: 02.03.2010 JP 2010045101
(43) Date of publication of application: 07.09.2011
(73) Proprietor: Carl Freudenberg KG, 69469 Weinheim (DE)
(72) Inventor: Kobayashi, Mitsugu, Fukushima-shi Fukushima 960-8157 (JP)

(56) References cited:
- EP-A1- 0 519 158
- EP-A1- 1 818 514
- EP-A1- 1 854 965
- EP-A1- 1 884 630
- EP-A1- 1 939 413
- EP-A1- 2 112 337
- US-B1- 6 394 463

## Description

### BACKGROUND OF THE INVENTION

### Field of the Invention

The present invention relates to a valve stem seal which is a kind of a sealing device.

### Description of the Related Art

In recent years, there has been a tendency that a port pressure increases with an increase in output of an engine. For this reason, in a valve stem seal, there is a demand for a reduction of a variation in leakage amount of oil due to a back pressure, and this is examined from various viewpoints.

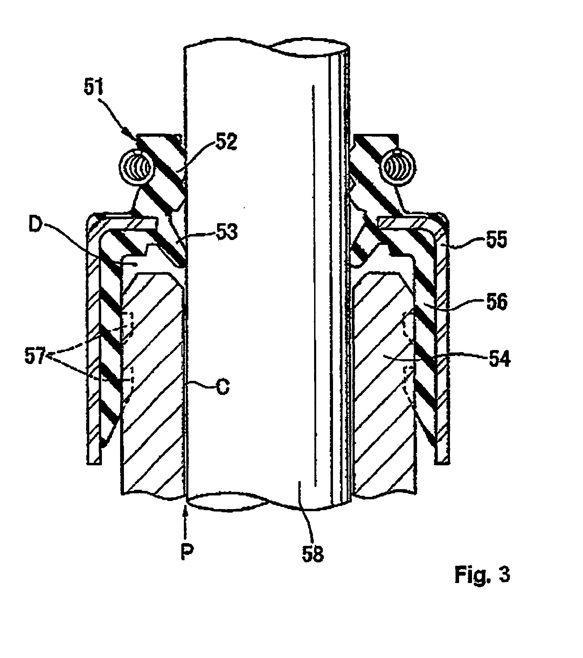

In an existing valve stem seal 51 shown in Fig. 3, a back pressure lip 53 is provided together with an oil lip 52 as a main lip, so that a variation in oil leakage amount may be suppressed by a sealing action of the back pressure lip 53.

Further, the valve stem seal 51 of Fig. 3 is mounted in a manner of being fitted to an outer-diameter surface of a valve stem guide 54, an inner-diameter rubber portion 56 attached to an inner-diameter surface of a metallic ring 55 has a fitting margin set to have a diameter smaller than the outer diameter of the valve stem guide 54, and the inner-diameter rubber portion 56 encroaches on a guide groove 57 provided at the outer-diameter surface of the valve stem guide 54, thereby setting a holding force of the seal 51.

In the above-described configuration, a generated port pressure P enters a space D between the valve stem guide 54 and the back pressure lip 53 through a gap C between the valve stem guide 54 and the valve stem 58, and pressurizes the entire surface of the space D.

However, in the above-described configuration, since the inner-diameter rubber portion 56 attached to the inner-diameter surface of the metallic ring 55 is in close contact with the outer-diameter surface of the valve stem guide 54 over the whole circumference, the pressure entering the space D acts as a force for pressing the seal 51 upward and a force for pressing the seal 51 outward in the radial direction.

Accordingly, when a high pressure is generated, the force for pressing the seal 51 upward may become larger than the holding force of the seal 51, and in this case, there is a concern that the seal 51 may be separated.
[Patent Document 1] Japanese Patent Application Laid-Open No. 2009-264415 (Fig. 6)

### SUMMARY OF THE INVENTION

The invention is made in view of such circumstances, and an object of the invention is to suppress occurrence of a separation of a seal in a valve stem seal including an oil lip and a back pressure lip and fitted to an outer-diameter portion of a valve stem guide.

In order to attain the above-described object, according to a first aspect of the invention, there is provided a valve stem seal that is mounted on a valve stem guide in which a valve stem is inserted through an inner-diameter shaft hole of a cylindrical portion, and a guide groove is formed in an outer-diameter surface of the cylindrical portion, the valve stem seal including: a metallic ring which is disposed on the outer diameter side of the valve stem guide; a rubber-like elastic body which is attached to the metallic ring; and an inner-diameter rubber portion which is fitted to the outer-diameter surface of the valve stem guide together with an oil lip and a back pressure lip coming into close contact with the outer-diameter surface of the valve stem while having a predetermined fitting margin by the use of the rubber-like elastic body, wherein a pressure receiving lip engaging with the guide groove is provided in the inner-diameter surface of the inner-diameter rubber portion, and wherein a channel is provided in a portion between the back pressure lip and the pressure receiving lip of the inner-diameter rubber portion so as to guide a pressure which has entered from a gap between the valve stem guide and the valve stem to a space between the valve stem guide and the back pressure lip toward the pressure receiving lip.

Further, according to a second aspect of the invention, in the valve stem seal as claimed in the first aspect, a plurality of protrusion portions is formed evenly on the circumference of the portion between the back pressure lip and the pressure receiving lip of the inner-diameter rubber portion to be fitted to the outer-diameter surface of the valve stem guide while having a predetermined fitting margin, and the channel is formed by the relative concave portions between the adjacent protrusion portions.

Further, according to a third aspect of the invention, in the valve stem seal as claimed in the first or second aspect, the whole circumference of a portion of the inner-diameter rubber portion located closer to a port side than the pressure receiving lip is fitted to the outer-diameter surface of the valve stem guide while having a predetermined fitting margin.

In the valve stem seal having the above-described configuration, the pressure receiving lip engaging with the guide groove is provided in the inner-diameter surface of the inner-diameter rubber portion, and the channel is provided in a portion between the back pressure lip and the pressure receiving lip of the inner-diameter rubber portion so as to guide a pressure which has entered from a gap between the valve stem guide and the valve stem to a space between the valve stem guide and the back pressure lip toward the pressure receiving lip. Accordingly, the pressure inside the space acts on the pressure receiving lip via the channel, and the pressure acting thereon acts as a force in the direction where the occurrence of the separation of the valve stem seal is suppressed. Further, since the pressure receiving lip engages with the guide groove, this engagement structure also acts to suppress the occurrence of the separation of the valve stem seal. Accordingly, with this configuration, the occurrence of the separation of the valve stem seal may be suppressed.

As the channel of the pressure in the inner-diameter rubber portion, the inner-diameter surface of the inner-diameter rubber portion may be provided with the plurality of protrusion portions provided evenly on the circumference and fitted to the outer-diameter surface of the valve stem guide with a predetermined fitting margin and the channel is formed by the relative concave portions between the adjacent protrusion portions. When the channel is provided in this manner, a force allowing the protrusion portion to be fitted to the outer-diameter surface of the valve stem guide with a predetermined fitting margin may be used as a part of a force for suppressing the occurrence of the separation of the valve stem seal. In this case, since the plurality of protrusion portions is provided evenly on the circumference and is equally fitted to the circumference of the valve stem guide, a satisfactory balance is obtained on the circumference.

Further, the whole circumference of a portion of the inner-diameter rubber portion located closer to a port side than the pressure receiving lip may be fitted to the outer-diameter surface of the valve stem guide while having a predetermined fitting margin. Likewise, when the whole circumference of the portion is in close contact with the valve stem guide, the fitting force generated at this time may be used as a part of a force for suppressing the occurrence of the separation of the valve stem seal.

Therefore, according to the invention, since a force for suppressing the occurrence of the separation of the valve stem seal may be set to be large with the above-described configuration, the occurrence of the separation of the valve stem seal may be effectively suppressed.

Further, when the valve stem guide has the guide groove at the outer-diameter surface thereof, since the valve stem seal of the invention may be mounted by directly using the valve stem guide, the existing facility may be directly utilized.

### BRIEF DESCRIPTION OF THE DRAWINGS

Fig. 1 is a half-cut cross-sectional view illustrating a valve stem seal according to an embodiment of the invention.
Fig. 2 is a half-cut cross-sectional view illustrating a mounted state of the valve stem seal.
Fig. 3 is a cross-sectional view illustrating a valve stem seal according to the related-art.

### DESCRIPTION OF THE PREFERRED EMBODIMENTS

The invention includes the following embodiment.

### (1) Configuration

(1-1) A lip portion side of a seal has an oil lip and a back pressure lip as in the related art.
(1-2) In a seal mount portion side, a rubber portion formed by baking in a metallic ring such that the upper side thereof has grooves evenly formed to have a gap with respect to an outer-diameter portion of a guide, and protrusions evenly formed to have a fitting margin coming into close contact with the outer-diameter portion of the guide. Here, the protrusion portion has a holding force with respect to the guide portion, and a generated port pressure is made to be interposed in a space (a space at the oil side of a pressure receiving lip) via another space (a space between a valve stem guide and a back pressure lip) by the evenly formed grooves, thereby having a downward pressing force opposing an upward pressing force generated by the pressure to press the seal upward.
(1-3) The middle portion is provided with a pressure receiving lip having a fitting margin coming into close contact with the groove portion at the outer-diameter portion of the guide, the pressure interposed in the space (the space at the oil side of the pressure receiving lip) is sealed, and a downward pressing force generated by a pressure and a force pressing the outer-diameter portion of the guide groove inward are obtained.
(1-4) The lower portion has a fitting margin coming into close contact with the outer-diameter portion of the guide over the whole circumference, oil coming from the lower side of the outer peripheral side of the seal is sealed, and a holding force is obtained with respect to the guide.

### (2) Effect

Since the upper side of the rubber portion formed by baking in the metallic ring of the seal attachment portion to the guide is provided with evenly formed grooves, the generated port pressure is made to be interposed in a space (a space at the side of oil of the pressure receiving lip) via another space (a space between the valve stem guide and the back pressure lip), and the pressure is sealed by the pressure receiving lip provided at the middle portion to have a force pressing the seal downward by the pressure and a force pressing the outer-diameter portion of the guide groove inward. Accordingly, the upward pressing force generated by the pressure of the space (the space between the valve stem guide and the back pressure lip) may be canceled or reduced, and the separation of the seal may be prevented even in the event of generation of high pressure.

### [Embodiment]

Next, an embodiment of the invention will be described by referring to the drawings.

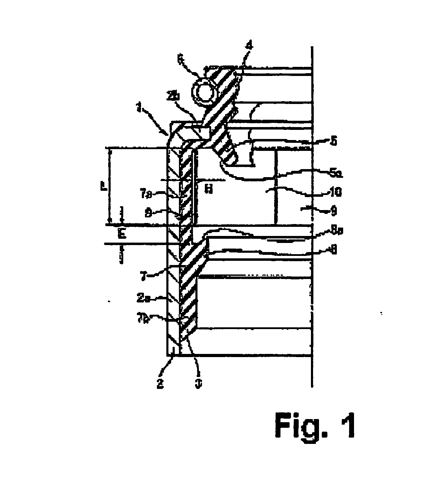

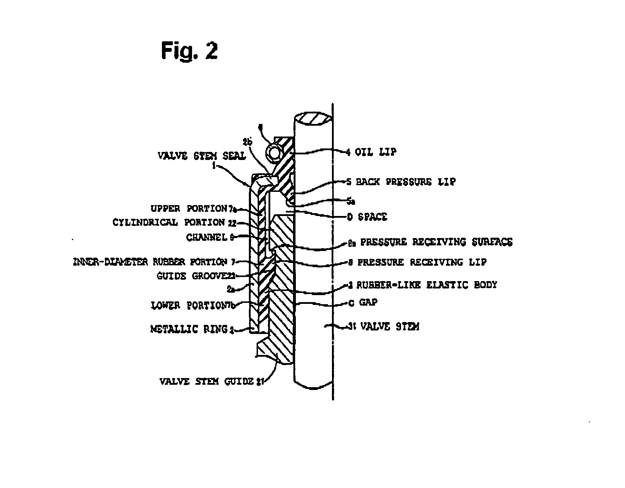

Fig. 1 is a half-cut cross-sectional view illustrating a valve stem seal 1 according to the embodiment of the invention, and Fig. 2 illustrates the mounted state thereof. In Figs. 1 and 2, the upper side of the drawing is the oil side, and the lower side is the port side. Further, in Fig. 1, a back pressure lip 5 is depicted such that a part of the circumference is notched.

As shown in Fig. 2, the valve stem seal 1 according to the embodiment is mounted on an outer-diameter portion of a valve stem guide 21 in which a valve stem 31 is inserted through an inner-diameter shaft hole of a cylindrical portion 22 so as to be slidable in the axial direction and an annular guide groove 23 is provided in the outer-diameter surface of the cylindrical portion 22, and includes a metallic ring (an attachment ring) 2 disposed at the outer diameter side of the valve stem guide 21 and a rubber-like elastic body 3 attached (cure-attached) to the metallic ring 2. By using the rubber-like elastic body 3, an oil lip 4 and a back pressure lip 5 being in close contact with the outer-diameter surface of the valve stem 31 are integrally molded with an inner-diameter rubber portion 7 fitted to the outer-diameter surface of the valve stem guide 21 with a predetermined fitting margin. By integrally molding a flange portion 2b at the upper end of a cylindrical portion 2a of the metallic ring 2 to face the inside of the radial direction, the oil lip 4 and the back pressure lip 5 are held by the inner-diameter portion of the flange portion 2b. A garter spring 6 is fitted to the oil lip 4 so as to adjust the fitting margin. The back pressure lip 5 is disposed at the lower side of the oil lip 4 such that a pressure receiving surface 5a faces the lower side.

An annular pressure receiving lip 8 is integrally formed at the center in the axial direction of the inner-diameter surface of the inner-diameter rubber portion 7 so as to engage with the guide groove 23 in the axial direction, and the pressure receiving lip 8 is formed such that the pressure receiving surface 8a faces the upper side opposite to the side of the back pressure lip 5, that is, the inner-diameter portion is located to be closer to the upper side than the outer-diameter portion. The upper side surface of the guide groove 23 is formed in a plane shape that is perpendicular to the axial direction so that the pressure receiving lip 8 easily engages therewith. In the pressure receiving lip 8, the inner-diameter surface formed in a cylindrical surface shape comes into close contact with the groove bottom surface of the guide groove 23 with a predetermined sealing surface pressure, thereby allowing the portion to exhibit a sealing action.

Further, a portion (an upper portion) 7a located between the back pressure lip 5 and the pressure receiving lip 8 in the inner-diameter rubber portion 7 is provided with a channel 9 which guides a pressure entering a space D between the back pressure lip 5 and the valve stem guide 21 via a gap C between the valve stem 31 and the valve stem guide 21 toward the pressure receiving lip 8. The channel 9 is formed in the inner-diameter surface of the upper portion 7a by the relative concave portions between adjacent protrusion portions 10, where a plurality of protrusion portions 10 is arranged evenly on the circumference and is fitted to (brought into close contact with) the outer-diameter surface of the valve stem guide 21 with a predetermined fitting margin. The even numbers are, for example, four even numbers, but the invention is not limited thereto. The axial lengths of the protrusion portion 10 and the channel 9 are denoted by a symbol L in Fig. 1. The height of the protrusion portion 10, that is, the depth of the channel 9 is denoted by a symbol H in Fig. 1. In addition, since the channel 9 is half cut in the cross-sectional view in this drawing, the portion having the cross-sections of the channel 9 and the protrusion 10 is not depicted by hatching.

Furthermore, the protrusion portion 10 and the pressure receiving lip 8 provided in the inner-diameter surface of the inner-diameter rubber portion 7 are spaced from each other in the axial direction, that is, a predetermined axial gap E is set between both members 8 and 10.

Moreover, in a portion (a lower portion) 7b located at the lower side of the pressure receiving lip 8 in the inner-diameter rubber portion 7, the inner-diameter surface is formed in a cylindrical surface shape, and the whole circumference surface is fitted to the outer-diameter surface of the valve stem guide 21 with a predetermined fitting margin. In the embodiment, the inner diameter of the lower portion 7b is set to be equal or substantially equal to the inner diameter of the protrusion portion 10.

The valve stem seal 1 with the above-described configuration is mounted as shown in Fig. 2. According to this structure, the following effect may be exhibited.

That is, in the valve stem seal 1 with the above-described configuration, the inner-diameter surface of the inner-diameter rubber portion 7 is provided with the pressure receiving lip 8 engaging with the guide groove 23 of the valve stem guide 21, and the inner-diameter surface of the upper portion 7a of the inner-diameter rubber portion 7 is provided with the channel 9 guiding a pressure. Accordingly, the pressure inside the space D acts on the pressure receiving lip 8 via the channel 9, and the pressure acting thereon acts as a force acting downward, that is, in the direction in which the separation of the seal 1 is suppressed, whereby a part of a force pushing the seal 1 upward is canceled out and the latter force is reduced. Further, since the pressure receiving lip 8 engages with the guide grove 23, this engagement structure also acts to suppress the separation of the seal 1. Accordingly, with such a configuration, the occurrence of the separation of the seal 1 may be suppressed.

Further, as a structure in which the channel 9 is provided in the inner-diameter rubber portion 7, the inner-diameter surface of the upper portion 7a of the inner-diameter rubber portion 7 is provided with the plurality of protrusion portions 10 arranged evenly on the circumference and fitted to the outer-diameter surface of the valve stem guide 21 with a predetermined fitting margin, and the channel 9 is provided at the relative concave portions between the adjacent protrusion portions 10. For this reason, a force allowing the protrusion portion 10 to be fitted to the outer-diameter surface of the valve stem guide 21 with a predetermined fitting margin may be used as a part of a force for suppressing the occurrence of the separation of the seal 1. Since the plurality of protrusion portions 10 is provided evenly on the circumference and is equally fitted to the outer-diameter surface of the valve stem guide, a satisfactory balance is obtained on the circumference.

Furthermore, as the structure of the lower portion 7b of the inner-diameter rubber portion 7, the whole circumference surface thereof is fitted to the outer-diameter surface of the valve stem guide 21 with a predetermined fitting margin, and hence the fitting force generated at this time may be used as a part of a force for suppressing the occurrence of the separation of the seal 1.

Accordingly, the occurrence of the separation of the valve stem seal 1 may be effectively suppressed.

### Description of Symbols

1: VALVE STEM SEAL
2: METALLIC RING
2a: CYLINDRICAL PORTION
2b: FLANGE PORTION
3: RUBBER-LIKE ELASTIC BODY
4: OIL LIP
5: BACK PRESSURE LIP
5a, 8a: PRESSURE RECEIVING SURFACE
6: GARTER SPRING
7: INNER-DIAMETER RUBBER PORTION
7a: UPPER PORTION
7b: LOWER PORTION
8: PRESSURE RECEIVING LIP
9: CHANNEL
10: PROTRUSION PORTION
21: VALVE STEM GUIDE
22: CYLINDRICAL PORTION
23: GUIDE GROOVE
31: VALVE STEM
C: GAP BETWEEN VALVE STEM GUIDE AND VALVE STEM
D: SPACE BETWEEN VALVE STEM GUIDE AND BACK PRESSURE LIP

## Claims

1. A valve stem seal that is mounted on a valve stem guide in which a valve stem is inserted through an inner-diameter shaft hole of a cylindrical portion, and a guide groove is formed in an outer-diameter surface of the cylindrical portion, the valve stem seal comprising:
a metallic ring which is disposed on the outer diameter side of the valve stem guide;
a rubber-like elastic body which is attached to the metallic ring; and
an inner-diameter rubber portion which is fitted to the outer-diameter surface of the valve stem guide together with an oil lip and a back pressure lip coming into close contact with the outer-diameter surface of the valve stem while having a predetermined fitting margin by the use of the rubber-like elastic body,
wherein a pressure receiving lip engaging with the guide groove is provided in the inner-diameter surface of the inner-diameter rubber portion, and
wherein a channel is provided in a portion between the back pressure lip and the pressure receiving lip of the inner-diameter rubber portion so as to guide a pressure which has entered from a gap between the valve stem guide and the valve stem to a space between the valve stem guide and the back pressure lip, toward the pressure receiving lip.

2. The valve stem seal as claimed in claim 1,
wherein a plurality of protrusion portions is formed evenly on the circumference of the portion between the back pressure lip and the pressure receiving lip of the inner-diameter rubber portion to be fitted to the outer-diameter surface of the valve stem guide while having a predetermined fitting margin, and the channel is formed by the relative concave portions between the adjacent protrusion portions.

3. The valve stem seal as claimed in claim 1 or 2,
wherein the whole circumference of a portion of the inner-diameter rubber portion located closer to a side of port than the pressure receiving lip is fitted to the outer-diameter surface of the valve stem guide while having a predetermined fitting margin.

## Patentansprüche

1. Ventilschaftdichtung, die auf einer Ventilschaftführung montiert ist, in der ein Ventilschaft durch eine Innendurchmesserwellenbohrung eines zylinderförmigen Abschnitts eingeführt ist, und eine Führungsnut in einer Außendurchmesseroberfläche des zylinderförmigen Abschnitts ausgebildet ist, wobei die Ventilschaftdichtung Folgendes umfasst:
einen Metallring, der auf der Außendurchmesserseite der Ventilschaftführung angeordnet ist;
einen kautschukartigen elastischen Körper, der an dem Metallring befestigt ist; und einen Innendurchmesser-Kautschukabschnitt, der an die Außendurchmesser-Oberfläche der Ventilschaftführung zusammen mit einer Öllippe und einer Gegendrucklippe angepasst ist, die in engen Kontakt mit der Außendurchmesser-Oberfläche des Ventilschafts tritt, während sie gleichzeitig durch Verwenden des kautschukartigen elastischen Körpers einen vorbestimmten Anpassungsspielraum aufweist;
wobei eine Druckaufnahmelippe, die mit der Führungsnut in Eingriff steht, in der Innendurchmesser-Oberfläche des Innendurchmesser-Kautschukabschnitts bereitgestellt ist und wobei ein Kanal in einem Abschnitt zwischen der Gegendrucklippe und der Druckaufnahmelippe des Innendurchmesser-Kautschukabschnitts bereitgestellt ist, um einen Druck, der von einem Spalt zwischen der Ventilschaftführung und dem Ventilschaft in einen Raum zwischen der Ventilschaftführung und der Gegendrucklippe eingetreten ist, in Richtung der Druckaufnahmelippe, zu lenken.

2. Ventilschaftdichtung nach Anspruch 1,
wobei mehrere Vorsprungsabschnitte gleichmäßig auf dem Umfang des Abschnitts zwischen der Gegendrucklippe und der Druckaufnahmelippe des Innendurchmesser-Kautschukabschnitts ausgebildet sind, der an die Außendurchmesser-Oberfläche der Ventilschaftführung mit einem vorbestimmten Anpassungsspielraum angepasst ist, und der Kanal durch die relativ konkaven Abschnitte zwischen den benachbarten Vorsprungsabschnitten ausgebildet ist.

3. Ventilschaftdichtung nach Anspruch 1 oder 2,
wobei der gesamte Umfang eines Abschnitts des Innendurchmesser-Kautschukabschnitts, der näher zu einer Seite der Öffnung als die Druckaufnahmelippe angeordnet ist, an die Außendurchmesseraberfläche der Ventilschaftführung angepasst ist und gleichzeitig einen vorbestimmten Anpassungsspielraum aufweist.

## Revendications

1. Joint de tige de soupape qui est monté sur un guide de tige de soupape dans lequel une tige de soupape est insérée par un trou d'axe dans le diamètre intérieur d'une partie cylindrique et une rainure de guidage est formée dans la surface de diamètre extérieur de la partie cylindrique, le joint de tige de soupape comprenant :
une bague métallique qui est disposée sur le côté de diamètre extérieur du guide de tige de soupape ;
un corps élastique genre caoutchouc qui est fixé à la bague métallique ; et
une partie en caoutchouc de diamètre intérieur qui est installée sur la surface de diamètre extérieur du guide de tige de soupape ainsi qu'une lèvre à huile et une lèvre de contre-pression qui viennent en contact étroit avec la surface de diamètre extérieur de la tige de soupape tout en ayant une tolérance d'ajustage prédéterminée grâce au corps élastique genre caoutchouc,
dans lequel une lèvre réceptrice de pression qui est en prise avec la rainure de guidage est disposée dans la surface de diamètre intérieur de la partie en caoutchouc de diamètre intérieur, et
dans lequel un canal est disposé dans une partie entre la lèvre de contre-pression et la lèvre réceptrice de pression de la partie en caoutchouc de diamètre intérieur de façon à canaliser une pression qui est entrée d'un interstice entre le guide de tige de soupape et la tige de soupape à un espace entre le guide de tige de soupape et la lèvre de contre-pression, vers la lèvre réceptrice de pression.

2. Joint de tige de soupape selon la revendication 1, dans lequel une pluralité de parties saillantes sont formées de façon égale sur la circonférence de la partie entre la lèvre de contre-pression et la lèvre réceptrice de pression de la partie en caoutchouc de diamètre intérieur pour se fixer à la surface de diamètre extérieur du guide de tige de soupape tout en ayant une tolérance d'ajustage prédéterminée et dans lequel le canal est constitué par les parties concaves correspondantes entre parties saillantes adjacentes.

3. Joint de tige de soupape selon la revendication 1 ou 2, dans lequel la totalité de la circonférence de la partie de la partie en caoutchouc de diamètre intérieur située plus près d'un bord d'orifice que la lèvre réceptrice de pression est fixée à la surface de diamètre extérieur du guide de tige de soupape tout en ayant une tolérance d'ajustage prédéterminée.
